# EUROPEAN PATENT SPECIFICATION

(11) **EP 4 509 730 B1**
(45) Date of publication and mention of the grant of the patent: **14.10.2026**
(21) Application number: 23220858.7
(22) Date of filing: 29.12.2023
(51) Int. Cl.: F16B 25/00, F16B 25/10

(54) **FASTENER**
BEFESTIGUNGSELEMENT
DISPOSITIF DE FIXATION

(30) Priority: 15.08.2023 TW 112208620 U
(43) Date of publication of application: 19.02.2025
(73) Proprietor: Bear Fastening Solutions Inc., Chiayi City 600075 (TW)
(72) Inventor: Tseng, Hung-Jen, 820 Kaohsiung City (TW)
(74) Representative: Cabinet Chaillot

(56) References cited:
- EP-A1- 3 249 244
- US-A1- 2003 235 483
- US-A1- 2017 152 881
- US-B2- 11 396 898

## Description

### BACKGROUND OF THE INVENTION

### 1. Field of the Invention

This invention relates to a screw structure and relates particularly to a fastener having a plurality of threads with different spiraling arrangements.

### 2. Description of the Related Art

Generally, a conventional screw includes a head, a shank extending outwards from the shank, and a threaded portion spiraling on the shank. In use, the threaded portion serves to cut a workpiece and drive the shank into the workpiece gradually. When the head touches a surface of the workpiece, a screwing operation of the screw is finished. However, the shank may get entangled in the uncut fibers of the workpiece easily, and threads of the threaded portion may be in very close contact with the workpiece during the drilling process. These phenomena cause larger resistance resisting the drilling process and thus decrease the drilling speed. The uncut fibers and debris generated by cutting the fibers may also be unduly accumulated among the threads and thus unable to be effectively removed, which causes the workpiece to crack easily. In this case, the screw may not be fastened in position. Therefore, a wood screw published by a Taiwanese patent application no. TW201137246A1 was disclosed. According to Fig. **2** of this published patent application, the wood screw **200** includes a head **210,** a shank **220,** a first thread **240,** at lease one second thread **250,** and a third thread **230.** The first thread **240** and the second thread **250** are formed on a tapered portion **222** of the shank **220.** The third thread **230** is formed on a parallel shank portion **224.** The first thread **240,** the second thread **250** and the third thread **230** do not connect with each other. The second thread **250** has a maximum guidance angle **θ2.** Accordingly, the threads are used to drill into a wood by cutting wood fibers and engage with the interior of the wood. When the head lies flush with the surface of the wood, the drilling operation is finished. However, because the threads are not connected to each other, debris and uncut fibers may be easily accumulated among the threads. In this case, the debris cannot be quickly removed, and an extremely large squeezing force may be exerted on an area between the shank and the wood, which leads to an increase in the drilling resistance, a decrease in the drilling speed, and even a cracking problem of the wood. Therefore, the screw still needs to be improved.

US 2003/235483 A1 discloses a screw with a pointed end which includes a head, a shank, and a conical end portion formed in a lower portion of the shank. The conical end portion has drill threads extending upward from or from near a pointed end to an upper end of the conical end portion and an incomplete securing thread whose lower end does not connect to the drill thread so that a waste passageway is formed between the incomplete securing thread and the drill threads.

### SUMMARY OF THE INVENTION

An object of this invention is to provide a fastener capable of decreasing the drilling resistance by an increase in the cutting ability and efficiency, preventing the workpiece from cracking by an acceleration in the removal of chips, and attaining an anti-loosening effect.

A fastener of this invention is as defined in claim 1 and includes a head, a shank unit extending longitudinally from the head, and a thread unit spirally disposed on the shank unit and adapted to cut fibers of a workpiece into chips. The shank unit defines a central axis and includes a drilling portion and a shank portion formed between the head and the drilling portion. The drilling portion has a tip located in opposing relationship to the head. The thread unit includes a first thread spirally disposed on an outer periphery of the shank portion and a second thread and a third thread spirally disposed on an outer periphery of the drilling portion, respectively. The third thread is located between the first thread and the second thread. The third thread has a first end facing the head and a second end opposite to the first end. The first end is connected to the first thread, and the second end thereof is connected to the tip of the drilling portion. The third thread is spirally extended around the outer periphery of the drilling portion. The extension of the third thread continuing to a surface of the first thread so that the first end of the third thread is directly connected to the first thread to guide the chips from the third thread to the first thread, thereby facilitating the movement of the chips and attaining a smooth removal of the chips.

Preferably, in one preferred embodiment, the first thread, the second thread, and the third thread define a first path, a second path, and a third path while spirally winding around the shank unit, respectively. A first included angle defined between the central axis and the first path of the first thread can be greater than a third included angle defined between the central axis and the third path of the third thread, and the third included angle can be greater than a second included angle defined between the central axis and the second path of the second thread. In another preferred embodiment, a fourth included angle is defined between the first path of the first thread and a horizontal reference line which is perpendicular to the central axis. A sixth included angle defined between the horizontal reference line and the third path of the third thread can be greater than the fourth included angle.

In accordance with the above configuration, the spiral arrangements of the second thread and the third thread cut fibers of a workpiece during a drilling process, which drives the shank unit into the workpiece quickly. The connection between the third thread and the first thread allows chips caused by cutting the workpiece to travel from the third thread to the first thread and then go out of the head by following the first thread, thereby decreasing the drilling resistance, attaining a quick drilling action and a smooth removal of chips, and preventing the workpiece from cracking. Furthermore, the space between the thread unit and the workpiece can accommodate chips in moderation for increasing the combination between the fastener and the workpiece, thereby attaining an anti-loosening effect.

Preferably, the first thread includes a first upper surface facing the head, a first lower surface facing the tip, and a first thread angle defined between the first upper surface and the first lower surface. The second thread includes a second upper surface facing the head, a second lower surface facing the tip, and a second thread angle defined between the second upper surface and the second lower surface. The third thread includes a third upper surface facing the head, a third lower surface facing the tip, and a third thread angle defined between the third upper surface and the third lower surface. In one preferred embodiment, the first thread angle can be different from either one or both of the third thread angle and the second thread angle. Preferably, the first thread angle is smaller than the third thread angle and the second thread angle. It is also possible that the second thread angle is equal to the third thread angle.

Preferably, in one preferred embodiment, the second upper surface and the second lower surface converge at a peak which defines a peak reference line perpendicular to the central axis. A second upper thread angle defined between the second upper surface and the peak reference line can be equal to a second lower thread angle defined between the second lower surface and the peak reference line. Consequently, the second thread can be symmetrical.

Preferably, in one preferred embodiment, the third upper surface and the third lower surface converge at a crest which defines a crest reference line perpendicular to the central axis. A third upper thread angle defined between the third upper surface and the crest reference line can be different from a third lower thread angle defined between the third lower surface and the crest reference line. Consequently, the third thread can be asymmetrical.

The first thread includes a plurality of first threaded convolutions. In one preferred embodiment, a cutting unit can be formed on each of the first threaded convolutions. The first thread also defines an imaginary line which is defined by connecting respective cutting units of adjacent first threaded convolutions sequentially, and preferably the imaginary line is non-parallel to the central axis of the shank. Accordingly, the cutting units formed on the first threaded convolutions can assist the first thread in cutting, thereby attaining an auxiliary cutting effect.

Preferably, in one preferred embodiment, the second thread is connected to the tip so that the spirally-winding arrangement of the second thread starts from the tip. In another preferred embodiment, the first thread is connected to the tip so that the spirally-winding arrangement of the first thread starts from the tip.

### BRIEF DESCRIPTION OF THE DRAWINGS

Fig. 1 is a schematic view showing a first not claimed embodiment;
Fig. 2 is a schematic view showing the operation of the first embodiment;
Fig. 3 is a schematic view showing a second preferred embodiment of this invention;
Fig. 4 is a schematic view showing a third preferred embodiment of this invention;
Fig. 5 is a schematic view showing a fourth preferred embodiment of this invention;
Fig. 6 is a partial schematic view showing a variation of the fourth preferred embodiment;
Fig. 7 is a cross-sectional view showing an encircled portion F7 of Fig. 5;
Fig. 8 is a cross-sectional view showing an encircled portion F8 of Fig. 5;
Fig. 9 is a cross-sectional view showing an encircled portion F9 of Fig. 5;
Fig. 10 is a schematic view showing a fifth preferred embodiment of this invention wherein a cutting unit is in combination with the fastener shown in Fig. 1;
Fig. 11 is a schematic view showing the fifth preferred embodiment wherein the cutting unit is in combination with the fastener shown in Fig. 3;
Fig. 12 is a schematic view showing the fifth preferred embodiment wherein the cutting unit is in combination with the fastener shown in Fig. 4;
Fig. 13 is a schematic view showing the fifth preferred embodiment wherein the cutting unit is in combination with the fastener shown in Fig. 5; and
Fig. 14 is a partial schematic view showing the fifth preferred embodiment wherein the cutting unit is in combination with the fastener shown in Fig. 6.

### DETAILED DESCRIPTION OF THE PREFERRED EMBODIMENTS

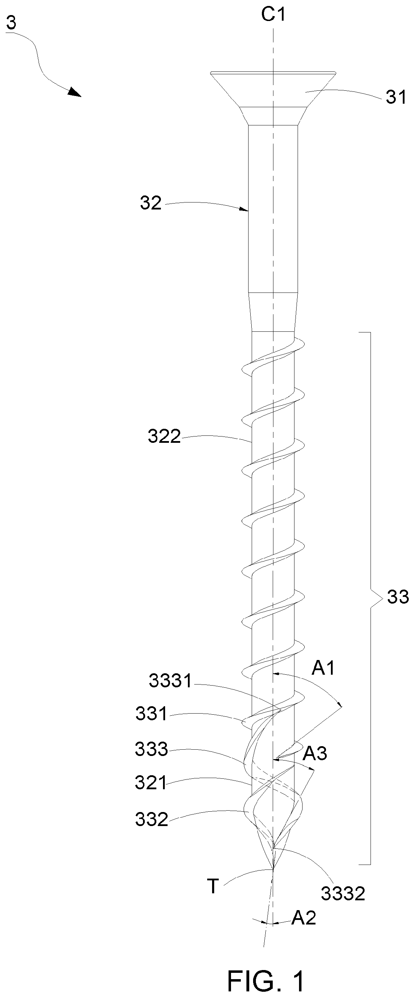

Referring to Fig. **1****,** a first not claimed embodiment of the fastener **3** is shown. The fastener **3** includes a head **31,** a shank unit **32** extending outwardly from the head **31,** and a thread unit **33** spirally disposed on the shank unit **32.** Explicitly, the shank unit **32** defines a central axis **C1** and includes a drilling portion **321** and a shank portion **322** formed between the head **31** and the drilling portion **321.** The drilling portion **321** is longitudinally extended by a length and provides a tip **T** located in opposing relationship to the head **31.** The drilling portion **321** can be gradually reduced to become a tapering shape, preferably a conical shape, so that the tip **T** is in the form of a pointed tip.

The thread unit **33** is spirally disposed on the shank unit **32.** Explicitly, the thread unit **33** includes a first thread **331,** a second thread **332,** and a third thread **333.** The first thread **331** is primarily disposed on an outer periphery of the shank portion **322** in a spiral manner. The first thread **331** is spirally extended in the direction of the head **31 by** a length, and accordingly a spiral angle is defined. In other words, the first thread **331** defines a first path while spirally winding around the shank portion **322,** and a first included angle **A1** is defined between the central axis **C1** and the first path of the first thread **331.** The second thread **332** is primarily disposed on an outer periphery of the drilling portion **321** in a spiral manner, and the third thread **332** is primarily disposed on the outer periphery of the drilling portion **321** in a spiral manner. Both of the second thread **332** and the third thread **333** are extended towards the head **31.** Therefore, it is possible that the threads **332, 333** can be only located within the drilling portion **321** or can be further extended to the outer periphery of the shank portion **322.** In addition, the second thread **332** and the third thread **333** define spiral angles, respectively. In other words, the second thread **332** defines a second path while spirally winding around the drilling portion **321,** and the third thread **333** defines a third path while spirally winding around the drilling portion **321.** A second included angle **A2** is defined between the central axis **C1** and the second path of the second thread **332,** and a third included angle **A3** is defined between the central axis **C1** and the third path of the third thread **333.**

Regarding the spiral arrangement of the second thread **332,** the second thread **332** can be connected to or not connected to the tip **T** of the drilling portion **321.** In the first embodiment, it takes an example of a structure formed by connecting one end of the second thread **332** to the tip **T** so that the spirally-winding arrangement of the second thread **332,** i.e. the second path, starts from the tip **T.** Another end of the second thread **332** can lie between the first thread **331** and the third thread **333.** Furthermore, the third thread **333** is spirally disposed between the first thread **331** and the second thread **332.** The third thread **333** has a first end **3331** and a second end **3332** opposite to the first end **3331.** The first end **3331** is an end which faces the head **31.** The first end **3331** is connected to the first thread **331.** The second end **3332** can be connected to or not connected to the tip **T.** In the first embodiment, it takes an example of a structure whose second end **3332** lies among the second thread **332,** which causes the third thread **333** to be spirally extended from a place among the second thread **332** to the first thread **331.**

Furthermore, the first included angle **A1** of the first thread **331,** the second included angle **A2** of the second thread **332,** and the third included angle **A3** of the third thread **333** can be different from each other. For example, the first included angle **A1** is greater than the third included angle **A3,** and the third included angle **A3** is greater than the second included angle **A2.** Accordingly, the thread unit **33** has three threads with different spiral arrangements, as for example shown in Fig. **1****.** The operation of this invention will be described according to the first embodiment.

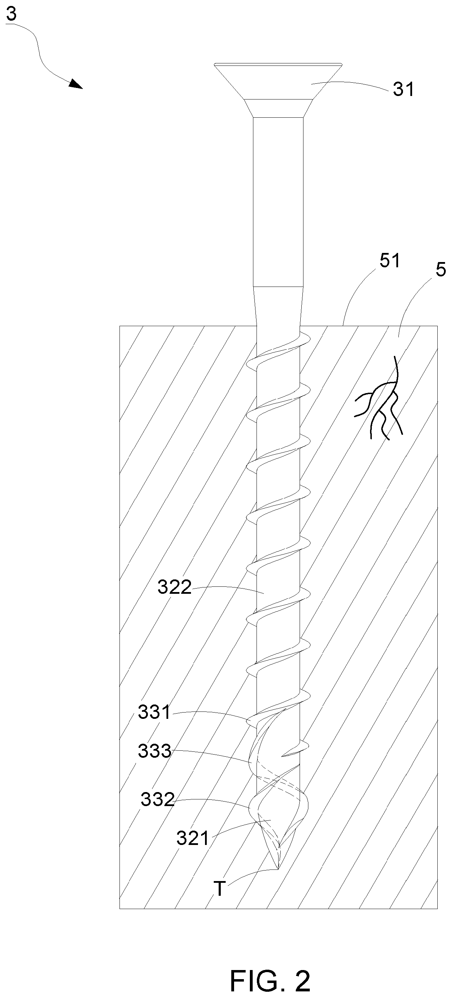

The operation of this invention is described with the aid of Fig. **1** and Fig. **2****.** In use, the drilling portion **321** is put against a surface **51** of the workpiece **5.** Then, the head **31** is rotated, and the drilling portion **321** is driven to execute a screwing operation. The second thread **332** is in a steeper state because of the second included angle **A2** when the second thread **332** is connected to the tip **T.** The coexistence of the above conditions allow the second thread **332** to cut fibers inside the workpiece **5** and conduct a drilling action at the beginning of the screwing operation. Meanwhile, the third thread **333** formed on the drilling portion **321** continues cutting the workpiece **5** while driving the second thread **332** into the workpiece **5.** The cooperation between the second thread **332** and the third thread **333** increases the cutting ability and efficiency, thereby preventing the occurrence of uncut fibers, preventing the drilling portion **321** from getting entangled in the uncut fibers, and reducing the resistance against the drilling action. Consequently, the drilling portion **321** is quickly and smoothly drilled into the workpiece **5** without difficulty. When the third thread **333** enters the workpiece **5,** the first thread **331** follows the third thread **333** and continues cutting the workpiece **5** so that the shank portion **322** is driven and quickly drilled into the workpiece **5,** and the drilling resistance is also decreased. When the head **31** fits level with the surface **51** of the workpiece **5,** the thread unit **33** is firmly engaged with an inner wall of the workpiece **5** to allow the fastener 3 to be screwed to the workpiece **5** in position. Consequently, the quick screwing operation of the fastener **3** is completed.

With respect to the drilling action, different spiral arrangements caused by the first thread **331,** the second thread **332,** and the third thread **333** cooperate with the third thread **333** formed between the second thread **332** and the first thread **331.** Accordingly, chips caused by cutting the fibers of the workpiece **5** are pushed to the third thread **333** along a spiral track created by the second thread **332.** Meanwhile, because the third thread **333** is connected to the first thread **331,** the chips moves directly to the first thread **331** along a spiral track created by the third thread **333.** Then, the chips moves towards the head **31** along a spiral track created by the first thread **331.** Thereafter, some chips can be properly pushed out of the workpiece **5** so that a quick removal of chips is attained to prevent excessive chips from exerting undue pressure on the interior of the workpiece **5** and decrease the drilling resistance. Therefore, the workpiece **5** does not crack easily. The accumulation of excessive chips between the threads **331, 332, 333** of the thread unit **33** can also be prevented, with the result that remaining chips can be properly stored in the space between the shank unit **32** and the workpiece **5** to allow the fastener **3** to be firmly fastened in position. Thus, the combination between the fastener **3** and the workpiece **5** is increased. At this moment, the fastener **3** does not move away from the workpiece **5** automatically if the fastener **3** is subjected to external force or vibration, thereby attaining an anti-loosening effect.

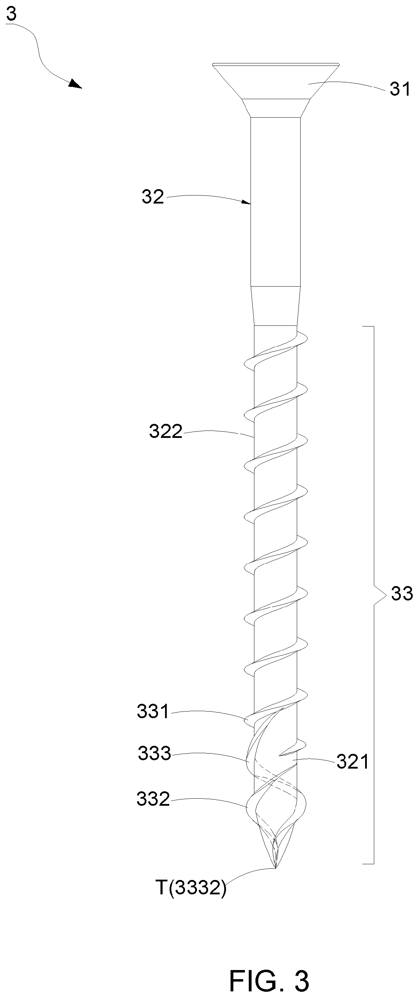

Referring to Fig. **3****,** a second preferred embodiment of the fastener **3** is shown. Elements, the concatenation of correlated elements, the operation, and effects of the second preferred embodiment are the same as those of the first preferred embodiment and herein are omitted. In the second preferred embodiment, both of the second thread **332** and the third thread **333** spiral from the tip **T** of the drilling portion **321,** respectively. In other words, one end of the second thread **332** and the second end **3332** of the third thread **333** are respectively joined to the tip **T,** as shown in the figure wherein only the numeral **3332** is indicated at the tip **T.** Accordingly, the second thread **332** and the third thread **333** drill and cut concurrently at the beginning of the screwing operation and guide the chips from the second thread **332** and the third thread **33** and thence to the first thread **331,** thereby decreasing the drilling resistance, attaining a quick drilling and screwing effect, attaining a smooth removal of the chips, preventing the cracking problem of the workpiece, and attaining an anti-loosening effect.

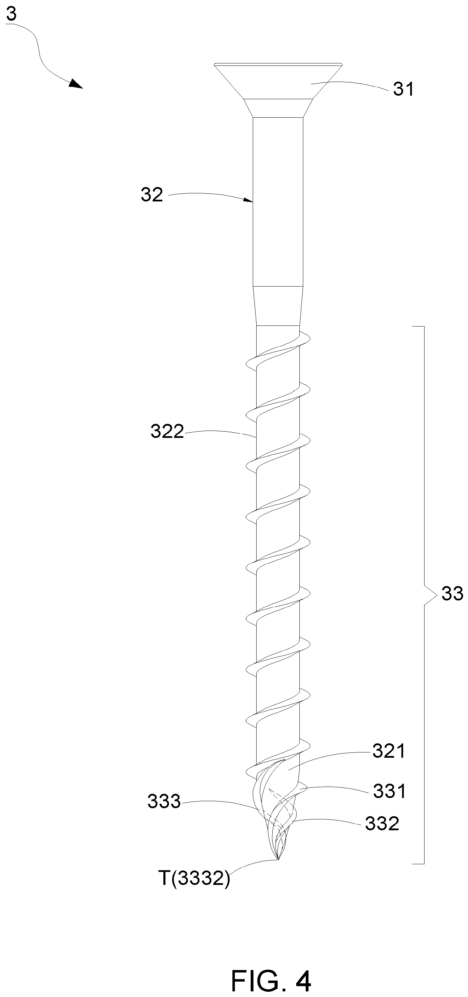

Referring to Fig. **4****,** a third preferred embodiment of the fastener **3** is shown. Elements, the concatenation of correlated elements, the operation, and effects of the third preferred embodiment are the same as those of the first preferred embodiment and herein are omitted. In the third preferred embodiment, the first thread **331** is extended to the drilling portion **321.** Particularly, the first thread **331,** the second thread **332,** and the third thread **333** spiral from the tip **T,** respectively. In other words, one end of the first thread **331,** one end of the second thread **332** and the second end **3332** of the third thread **333** are respectively joined to the tip **T,** as shown in the figure wherein only the numeral **3332** is indicated at the tip **T.** Accordingly, the first thread **331,** the second thread **332,** and the third thread **333** drill and cut concurrently at the beginning of the screwing operation and guide the chips from the second thread **332** and the third thread **333** and thence to the first thread **331,** thereby decreasing the drilling resistance, attaining a quick screwing and drilling effect, attaining a smooth removal of the chips, preventing the cracking problem of the workpiece, and attaining an anti-loosening effect.

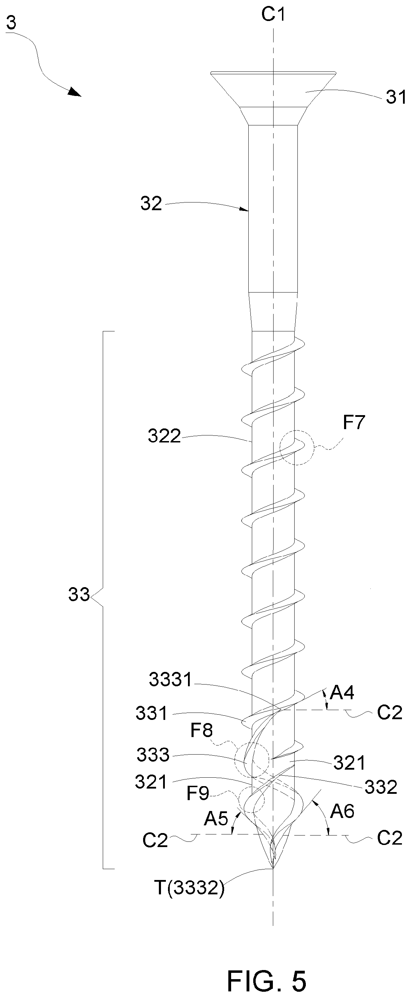

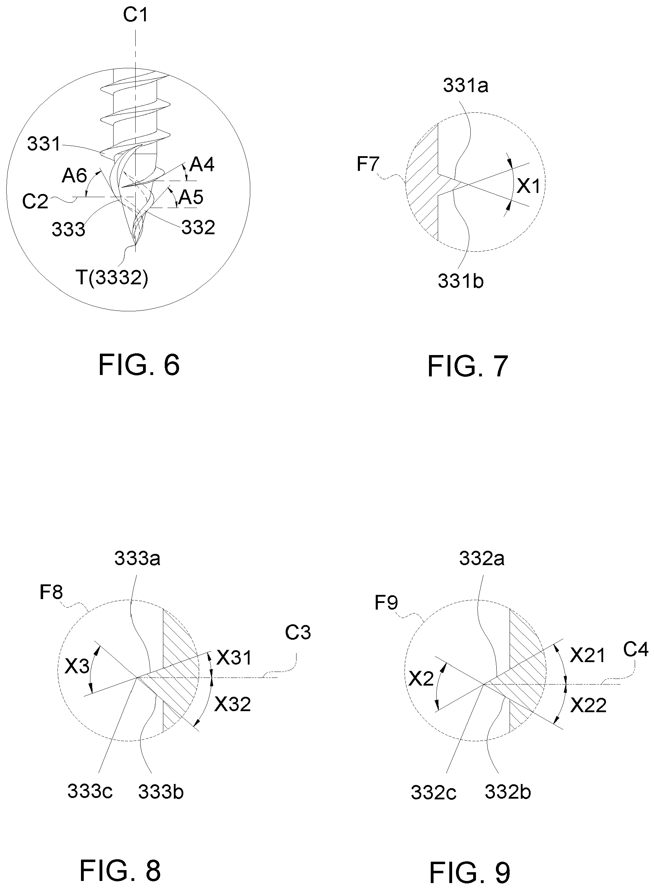

Referring to Fig. **5****,** a fourth preferred embodiment of the fastener **3** still includes the elements disclosed by the first preferred embodiment, namely the first thread **331,** the second thread **332,** and the third thread **333** formed between the first thread **331** and the second thread **332.** The fourth preferred embodiment is characterized in that the first end **3331** of the third thread **333** is connected to the first thread **331,** and the second end **3332** of the third thread **333** is connected to the tip **T** of the drilling portion **321.** The second thread **332** is not connected to the tip **T** so that a space is defined between the end of the second thread **332** and the tip **T.** The spiraling directions of the second thread **332** and the third thread **333** are not limited. Especially, the spiraling directions can be adjusted to meet the number of thread convolutions or the spiral angles. For example, the spiral appearance of the threads **332, 333** shown in Fig. **5** is different from the spiral appearance of the threads **332, 333** shown in Fig. **6****.** Both appearances are still based on the same structure and involved in the same operations and effects.

The shank unit **32** further defines a horizontal reference line **C2** perpendicular to the central axis **C1.** The first thread **331** defines a first path while spirally winding around the shank portion **322,** and the second thread **332** and the third thread **333** define a second path and a third path while spirally winding around the drilling portion **321,** respectively. Accordingly, a fourth included angle **A4** is defined between the horizontal reference line **C2** and the first path of the first thread **331,** a fifth included angle **A5** is defined between the horizontal reference line **C2** and the second path of the second thread **332,** and a sixth included angle **A6** is defined between the horizontal reference line **C2** and the third path of the third thread **333.** Preferably, the sixth included angle **A6** can be greater than the fourth included angle **A4,** and the sixth included angle **A6** can also be greater than the fifth included angle **A5.** For example, the value of the sixth included angle **A6** can be twice the value of the fourth included angle **A4,** and the value of the sixth included angle **A6** can be greater than the value of the fifth included angle **A5.** In terms of the horizontal reference line **C2,** the third thread **333** is inclined to a greater extent by comparison with the first thread **331** and the second thread **332,** thereby driving the drilling portion **321** into a workpiece easily.

Also referring to Figs. **7** to **9****,** the first thread **331** includes a first upper surface **331a** facing the head **31** and a first lower surface **331b** facing the tip **T.** The third thread **333** includes a third upper surface **333a** facing the head **31** and a third lower surface **333b** facing the tip **T.** The third upper surface **333a** and the third lower surface **333b** converge at a crest **333c.** In other words, the crest **333c** is defined along a junction of the third upper surface **333a** and the third lower surface **333b.** The second thread **332** includes a second upper surface **332a** facing the head **31** and a second lower surface **332b** facing the tip **T.** The second upper surface **332a** and the second lower surface **332b** converge at a peak **332c.** In other words, the peak **332c** is defined along a junction of the second upper surface **332a** and the second lower surface **332b.** The crest **333c** defines a crest reference line **C3** perpendicular to the central axis **C1.** The peak **332c** defines a peak reference line **C4** perpendicular to the central axis **C1.**

A first thread angle **X1** is defined between the first upper surface **331a** and the first lower surface **331b,** as shown in Fig. **7****.** The first thread angle **X1** can be different from a third thread angle **X3** which is shown in Fig. **8** and defined between the third upper surface **333a** and the third lower surface **333b** and can also be different from a second thread angle **X2** which is shown in Fig. **9** and defined between the second upper surface **332a** and the second lower surface **332b.** In the fourth preferred embodiment, the first thread angle **X1** is smaller than both of the third thread angle **X3** and the second thread angle **X2,** and the second thread angle **X2** is equal to the third thread angle **X3.** In addition, a third upper thread angle **X31** defined between the third upper surface **333a** and the crest reference line **C3** can be different from a third lower thread angle **X32** defined between the third lower surface **333b** and the crest reference line **C3.** Preferably, the third lower thread angle **X32** is larger than the third upper thread angle **X31,** thereby presenting an asymmetrical design (shown in Fig. **8**). A second upper thread angle **X21** defined between the second upper surface **332a** and the peak reference line **C4** can be equal to a second lower thread angle **X22** defined between the second lower surface **332b** and the peak reference line **C4,** thereby presenting a symmetrical design (as shown in Fig. **9**). Accordingly, as for example shown in this preferred embodiment, respective thread angles **X2, X3** of the symmetrical second thread **332** and the asymmetrical third thread **333** are the same and are larger than the first thread angle **X1** of the first thread **331.** The unique combination of the above conditions allows the threads **331, 332, 333** to be quickly driven into a workpiece with smaller drilling resistance and also enhances pull-out force, that is, pull-out resistance whereby the fastener **3** is not easily pulled out of the workpiece.

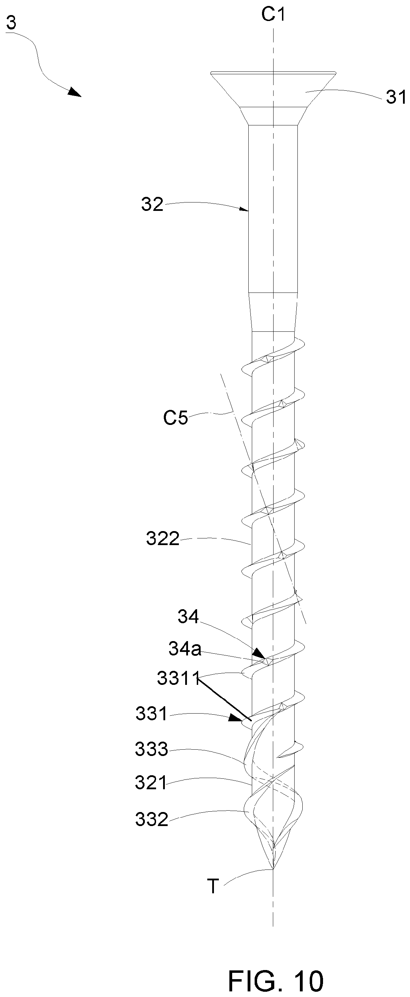

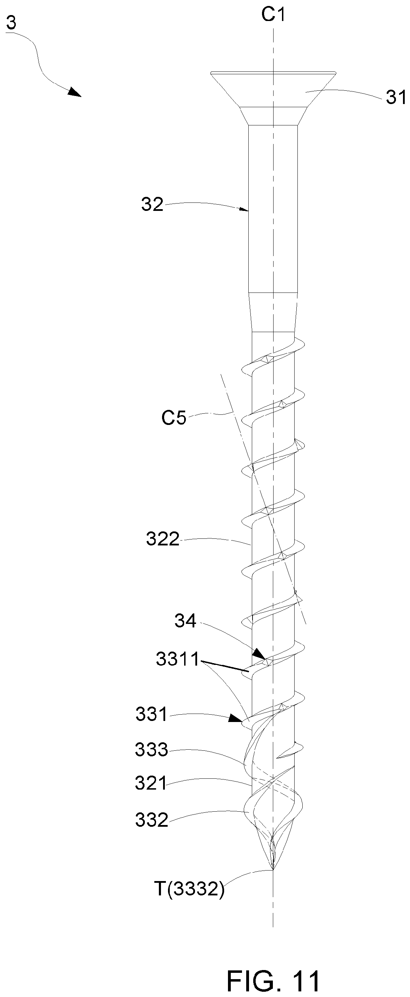

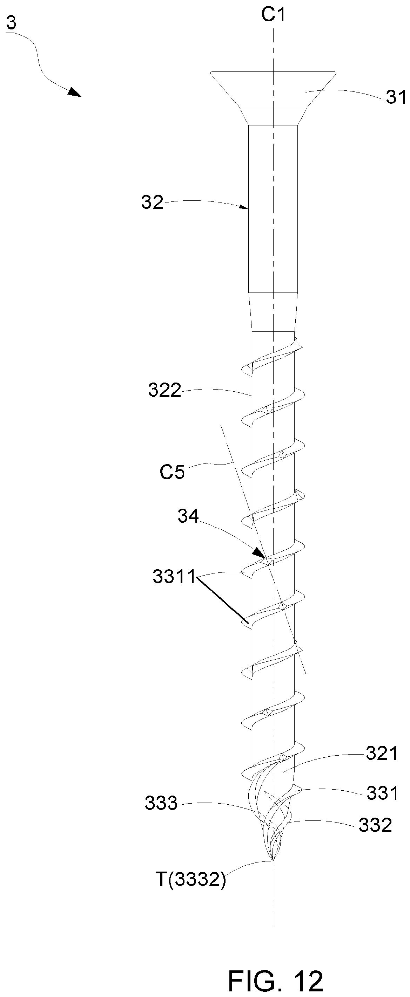

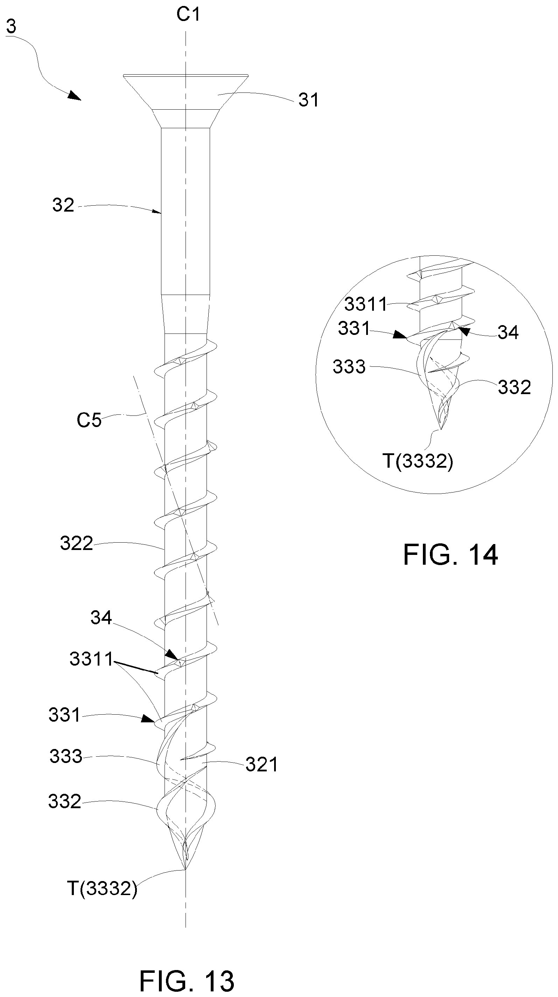

As mentioned above, the third thread **333** is connected to the tip **T** and inclined to a greater extent with respect to the horizontal reference line **C2.** The third thread **333** is also in the form of an asymmetric design. As to the operation of the fourth preferred embodiment, the above features allow the third thread **333** to cut fibers of a workpiece into chips and execute a smooth drilling action, and concurrently the second thread **332** formed on the drilling portion **321** cut the fibers into chips. Thus, the cutting ability and efficiency can be increased, and the drilling resistance can be efficiently decreased for attaining a quick screwing operation. The connection between the third thread **333** and the first thread **331** also allows the chips to travel directly from the third thread **333** to the first thread **331,** and the chips are finally removed from the head **31,** thereby attaining a quick removal of chips to protect the workpiece from the cracking problem and allowing remaining chips which are not removed from the head **31** to be stored between the shank unit **32** and the workpiece. Accordingly, the fastener **3** can be firmly fastened in position to attain an anti-loosening effect. A fifth preferred embodiment of the fastener **3** still includes the elements of the first preferred embodiment, namely the first thread **331,** the second thread **332,** and the third thread **333** formed between the first thread **331** and the second thread **332.** The first thread **331** includes a plurality of first threaded convolutions **3311,** and the fifth preferred embodiment is characterized in that a cutting unit **34** is formed on each first threaded convolution **3311.** The cutting unit **34** includes at least one cutting notch **34a,** and herein it takes an example of two spaced-apart cutting notches **34a** recessedly formed in each first threaded convolution **3311.** Accordingly, the cutting unit **34** can combine with the structures illustrated by Fig. **1****,** Fig. **3****,** and Fig. **4****,** and the combinations are respectively shown in Fig. **10****,** Fig. **11** and Fig. **12****.** The cutting unit **34** can also combine with the structures illustrated by Fig. **5** and Fig. **6****,** and the combinations are respectively shown in Fig. **13** and Fig. **14****.** Furthermore, the first thread **331** defines an imaginary line **C5.** The imaginary line **C5** is defined by connecting respective cutting units **34** of adjacent first threaded convolutions **3311** in sequence, and the imaginary line **C5** is not parallel to the central axis **C1.** In other words, an included angle is formed between the imaginary line **C5** and the central axis **C1** because of the non-parallel arrangement. According to the non-parallel arrangement, the cutting units **34** on the first threaded convolutions **3311** follow a spiral track caused by the drilling of the first threaded convolutions **3311** into a workpiece, thereby cutting the workpiece successively and guiding chips out of the head **31** smoothly for preventing the workpiece from cracking. The cutting units **34** also help decrease the drilling resistance for attaining a quick screw operation and an anti-loosening effect.

To sum up, a first thread, a second thread, and a third thread are respectively disposed on the outer periphery of the shank unit in different spiraling forms winding around the shank portion and the drilling portion. The third thread located between the first thread and the second thread is connected to the first thread and to a tip of the drilling portion. Accordingly, this invention takes advantage of different spiraling forms and the connection to the first thread to increase the cutting ability and efficiency, reduce drilling resistance, accelerate the removal of chips, and assist the shank unit in engaging with the workpiece firmly, thereby attaining a quick screwing effect, preventing the workpiece from cracking, and attaining an anti-loosening effect.

While the embodiments are shown and described above, it is understood that further variations and modifications may be made without departing from the scope of this invention as defined in the appended claims.

## Claims

1. A fastener (3) comprising:
a head (31);
a shank unit (32) extending longitudinally from said head (31) and defining a central axis (C1), wherein said shank unit (32) includes a drilling portion (321) and a shank portion (322) formed between said head (31) and said drilling portion (321), said drilling portion (321) having a tip (T) located in opposing relationship to said head (31); and
a thread unit (33) spirally disposed on said shank unit (32) and adapted to cut fibers of a workpiece (5) into chips;
wherein said thread unit (33) includes a first thread (331) spirally disposed on an outer periphery of said shank portion (322) and a second thread (332) and a third thread (333) spirally disposed on an outer periphery of said drilling portion (321), respectively, with said third thread (333) located between said first thread (331) and said second thread (332), said third thread (333) having a first end (3331) facing said head (31) and a second end (3332) opposite to said first end (3331), said second end (3332) of said third thread (333) being connected to said tip (T) of said drilling portion (321);
wherein said third thread (333) is spirally extended around said outer periphery of said drilling portion (321), the extension of the third thread (333) continuing to a surface of said first thread (331) so that said first end (3331) of said third thread (333) is directly connected to said first thread (331) to guide said chips from said third thread (333) to said first thread (331), thereby facilitating the movement of said chips and attaining a smooth removal of said chips.

2. The fastener (3) according to claim 1, wherein said shank unit (32) defines a horizontal reference line (C2) perpendicular to said central axis (C1), said first thread (331) defining a first path while spirally winding around said shank portion (322), said second thread (332) and said third thread (333) defining a second path and a third path respectively while spirally winding around said drilling portion (321), a fourth included angle (A4) being defined between said horizontal reference line (C2) and said first path of said first thread (331), a fifth included angle (A5) being defined between said horizontal reference line (C2) and said second path of said second thread (332), a sixth included angle (A6) being defined between said horizontal reference line (C2) and said third path of said third thread (333), said sixth included angle (A6) being greater than said fourth included angle (A4).

3. The fastener (3) according to claim 1, wherein said first thread (331) includes a first upper surface (331a) facing said head (31), a first lower surface (331b) facing said tip (T), and a first thread angle (X1) defined between said first upper surface (331a) and said first lower surface (331b), said third thread (333) including a third upper surface (333a) facing said head (31), a third lower surface (333b) facing said tip (T), and a third thread angle (X3) defined between said third upper surface (333a) and said third lower surface (333b), said first thread angle (X1) being different from said third thread angle (X3).

4. The fastener (3) according to claim 3, wherein said first thread angle (X1) is smaller than said third thread angle (X3).

5. The fastener (3) according to claim 1, wherein said third thread (333) includes a third upper surface (333a) facing said head (31) and a third lower surface (333b) facing said tip (T), said third upper surface (333a) and said third lower surface (333b) converging at a crest (333c), said crest (333c) defining a crest reference line (C3) perpendicular to said central axis (C1), a third upper thread angle (X31) defined between said third upper surface (333a) and said crest reference line (C3) being different from a third lower thread angle (X32) defined between said third lower surface (333b) and said crest reference line (C3).

6. The fastener (3) according to claim 1, wherein said second thread (332) includes a second upper surface (332a) facing said head (31) and a second lower surface (332b) facing said tip (T), said second upper surface (332a) and said second lower surface (332b) converging at a peak (332c), said peak (332c) defining a peak reference line (C4) perpendicular to said central axis (C1), a second upper thread angle (X21) defined between said second upper surface (332a) and said peak reference line (C4) being equal to a second lower thread angle (X22) defined between said second lower surface (332b) and said peak reference line (C4).

7. The fastener (3) according to claim 1, wherein said first thread (331) includes a first upper surface (331a) facing said head (31), a first lower surface (331b) facing said tip (T), and a first thread angle (X1) defined between said first upper surface (331a) and said first lower surface (331b), said second thread (332) including a second upper surface (332a) facing said head (31), a second lower surface (332b) facing said tip (T), and a second thread angle (X2) defined between said second upper surface (332a) and said second lower surface (332b), said first thread angle (X1) being different from said second thread angle (X2).

8. The fastener (3) according to claim 7, wherein said first thread angle (X1) is smaller than said second thread angle (X2).

9. The fastener (3) according to claim 1, wherein said second thread (332) includes a second upper surface (332a) facing said head (31), a second lower surface (332b) facing said tip (T), and a second thread angle (X2) defined between said second upper surface (332a) and said second lower surface (332b), said third thread (333) including a third upper surface (333a) facing said head (31), a third lower surface (333b) facing said tip (T), and a third thread angle (X3) defined between said third upper surface (333a) and said third lower surface (333b), said second thread angle (X2) being equal to said third thread angle (X3).

10. The fastener (3) according to claim 1, wherein said first thread (331) includes a plurality of first threaded convolutions (3311), a cutting unit (34) being formed on each of said first threaded convolutions (3311).

11. The fastener (3) according to claim 10, wherein said first thread (3311) defines an imaginary line (C5), said imaginary line (C5) being defined by connecting respective cutting units (34) of adjacent first threaded convolutions (3311) sequentially, said imaginary line (C5) being non-parallel to said central axis (C1) of said shank unit (32).

12. The fastener (3) according to claim 1, wherein said first thread (331) defines a first path while spirally winding around said shank portion (322), said second thread (332) and said third thread (333) defining a second path and a third path respectively while spirally winding around said drilling portion (321), a first included angle (A1) being defined between said central axis (C1) and said first path of said first thread (331), a second included angle (A2) being defined between said central axis (C1) and said second path of said second thread (332), a third included angle (A3) being defined between said central axis (C1) and said third path of said third thread (333), said first included angle (A1) being greater than said third included angle (A3), said third included angle (A3) being greater than said second included angle (A2).

13. The fastener (3) according to claim 12, wherein said second thread (332) is connected to said tip (T) so that said second thread (332) starts spiraling from said tip (T).

14. The fastener (3) according to claim 12, wherein said first thread (331) is connected to said tip (T) so that said first thread (331) starts spiraling from said tip (T).

## Patentansprüche

1. - Befestigungselement (3), umfassend:
einen Kopf (31);
eine Schafteinheit (32), die sich längs von dem Kopf (31) erstreckt und eine Mittelachse (C1) definiert, wobei die Schafteinheit (32) einen Bohrabschnitt (321) und einen Schaftabschnitt (322), der zwischen dem Kopf (31) und dem Bohrabschnitt (321) gebildet ist, umfasst, wobei der Bohrabschnitt (321) eine Spitze (T) aufweist, die sich in gegenüberliegender Beziehung zu dem Kopf (31) befindet; und
eine Gewindeeinheit (33), die spiralförmig an der Schafteinheit (32) angeordnet und angepasst ist, um Fasern eines Werkstücks (5) zu Spänen zu schneiden;
wobei die Gewindeeinheit (33) ein erstes Gewinde (331), das spiralförmig an einem Außenumfang des Schaftabschnitts (322) angeordnet ist, und ein zweites Gewinde (332) und ein drittes Gewinde (333), die jeweils spiralförmig an einem Außenumfang des Bohrabschnitts (321) angeordnet sind, beinhaltet, wobei sich das dritte Gewinde (333) zwischen dem ersten Gewinde (331) und dem zweiten Gewinde (332) befindet, wobei das dritte Gewinde (333) ein erstes Ende (3331), das dem Kopf (31) zugewandt ist, und ein zweites Ende (3332) gegenüber dem ersten Ende (3331) aufweist, wobei das zweite Ende (3332) des dritten Gewindes (333) mit der Spitze (T) des Bohrabschnitts (321) verbunden ist;
wobei sich das dritte Gewinde (333) spiralförmig um den Außenumfang des Bohrabschnitts (321) erstreckt, wobei sich die Erstreckung des dritten Gewindes (333) bis zu einer Oberfläche des ersten Gewindes (331) fortsetzt, sodass das erste Ende (3331) des dritten Gewindes (333) direkt mit dem ersten Gewinde (331) verbunden ist, um die Späne von dem dritten Gewinde (333) zu dem ersten Gewinde (331) zu führen, wodurch die Bewegung der Späne erleichtert und ein reibungsloser Austrag der Späne erreicht wird.

2. - Befestigungselement (3) nach Anspruch 1, wobei die Schafteinheit (32) eine horizontale Bezugslinie (C2) senkrecht zu der Mittelachse (C1) definiert, wobei das erste Gewinde (331) einen ersten Pfad definiert, während es sich spiralförmig um den Schaftabschnitt (322) windet, das zweite Gewinde (332) und das dritte Gewinde (333) jeweils einen zweiten Pfad und einen dritten Pfad definieren, während sie sich spiralförmig um den Bohrabschnitt (321) winden, wobei ein vierter Einschlusswinkel (A4) zwischen der horizontalen Bezugslinie (C2) und dem ersten Pfad des ersten Gewindes (331) definiert ist, ein fünfter Einschlusswinkel (A5) zwischen der horizontalen Bezugslinie (C2) und dem zweiten Pfad des zweiten Gewindes (332) definiert ist, ein sechster Einschlusswinkel (A6) zwischen der horizontalen Bezugslinie (C2) und dem dritten Pfad des dritten Gewindes (333) definiert ist, wobei der sechste Einschlusswinkel (A6) größer ist als der vierte Einschlusswinkel (A4).

3. - Befestigungselement (3) nach Anspruch 1, wobei das erste Gewinde (331) eine erste obere Fläche (331a), die dem Kopf (31) zugewandt ist, eine erste untere Fläche (331b), die der Spitze (T) zugewandt ist, und einen ersten Gewindewinkel (X1), der zwischen der ersten oberen Fläche (331a) und der ersten unteren Fläche (331b) definiert ist, beinhaltet, wobei das dritte Gewinde (333) eine dritte obere Fläche (333a), die dem Kopf (31) zugewandt ist, eine dritte untere Fläche (333b), die der Spitze (T) zugewandt ist, und einen dritten Gewindewinkel (X3), der zwischen der dritten oberen Fläche (333a) und der dritten unteren Fläche (333b) definiert ist, beinhaltet, wobei der erste Gewindewinkel (X1) sich von dem dritten Gewindewinkel (X3) unterscheidet.

4. - Befestigungselement (3) nach Anspruch 3, wobei der erste Gewindewinkel (X1) kleiner ist als der dritte Gewindewinkel (X3).

5. - Befestigungselement (3) nach Anspruch 1, wobei das dritte Gewinde (333) eine dritte obere Fläche (333a), die dem Kopf (31) zugewandt ist, und eine dritte untere Fläche (333b), die der Spitze (T) zugewandt ist, beinhaltet, wobei die dritte obere Fläche (333a) und die dritte untere Fläche (333b) an einem Grat (333c) zusammenlaufen, wobei der Grat (333c) eine Gratbezugslinie (C3) senkrecht zu der Mittelachse (C1) definiert, wobei sich ein dritter oberer Gewindewinkel (X31), der zwischen der dritten oberen Fläche (333a) und der Gratbezugslinie (C3) definiert ist, von einem dritten unteren Gewindewinkel (X32) unterscheidet, der zwischen der dritten unteren Fläche (333b) und der Gratbezugslinie (C3) definiert ist.

6. - Befestigungselement (3) nach Anspruch 1, wobei das zweite Gewinde (332) eine zweite obere Fläche (332a), die dem Kopf (31) zugewandt ist, und eine zweite untere Fläche (332b), die der Spitze (T) zugewandt ist, beinhaltet, wobei die zweite obere Fläche (332a) und die zweite untere Fläche (332b) an einem Höchstpunkt (332c) zusammenlaufen, wobei der Höchstpunkt (332c) eine Höchstpunktbezugslinie (C4) senkrecht zu der Mittelachse (C1) definiert, wobei ein zweiter oberer Gewindewinkel (X21) zwischen der zweiten oberen Fläche (332a) und der Höchstpunktbezugslinie (C4) definiert ist, der gleich wie ein zweiter unterer Gewindewinkel (X22) ist, der zwischen der zweiten unteren Fläche (332b) und der Höchstpunktbezugslinie (C4) definiert ist.

7. - Befestigungselement (3) nach Anspruch 1, wobei das erste Gewinde (331) eine erste obere Fläche (331a), die dem Kopf (31) zugewandt ist, eine erste untere Fläche (331b), die der Spitze (T) zugewandt ist, und einen ersten Gewindewinkel (X1), der zwischen der ersten oberen Fläche (331a) und der ersten unteren Fläche (331b) definiert ist, beinhaltet, wobei das zweite Gewinde (332) eine zweite obere Fläche (332a), die dem Kopf (31) zugewandt ist, eine zweite untere Fläche (332b), die der Spitze (T) zugewandt ist, und einen zweiten Gewindewinkel (X2), der zwischen der zweiten oberen Fläche (332a) und der zweiten unteren Fläche (332b) definiert ist, beinhaltet, wobei sich der erste Gewindewinkel (X1) von dem zweiten Gewindewinkel (X2) unterscheidet.

8. - Befestigungselement (3) nach Anspruch 7, wobei der erste Gewindewinkel (X1) kleiner ist als der zweite Gewindewinkel (X2).

9. - Befestigungselement (3) nach Anspruch 1, wobei das zweite Gewinde (332) eine zweite obere Fläche (332a), die dem Kopf (31) zugewandt ist, eine zweite untere Fläche (332b), die der Spitze (T) zugewandt ist, und einen zweiten Gewindewinkel (X2), der zwischen der zweiten oberen Fläche (332a) und der zweiten unteren Fläche (332b) definiert ist, beinhaltet, wobei das dritte Gewinde (333) eine dritte obere Fläche (333a), die dem Kopf (31) zugewandt ist, eine dritte untere Fläche (333b), die der Spitze (T) zugewandt ist, und einen dritten Gewindewinkel (X3), der zwischen der dritten oberen Fläche (333a) und der dritten unteren Fläche (333b) definiert ist, beinhaltet, wobei der zweite Gewindewinkel (X2) gleich wie der dritten Gewindewinkel (X3) ist.

10. - Befestigungselement (3) nach Anspruch 1, wobei das erste Gewinde (331) eine Vielzahl erster Gewindegänge (3311) beinhaltet, wobei an jedem der ersten Gewindegänge (3311) eine Schneideinheit (34) gebildet ist.

11. - Befestigungselement (3) nach Anspruch 10, wobei das erste Gewinde (3311) eine imaginäre Linie (C5) definiert, wobei die imaginäre Linie (C5) durch die Verbindung der jeweiligen Schneideinheiten (34) benachbarter erster Gewindegänge (3311) nacheinander definiert ist, wobei die imaginäre Linie (C5) nicht parallel zu der Mittelachse (C1) der Schafteinheit (32) ist.

12. - Befestigungselement (3) nach Anspruch 1, wobei das erste Gewinde (331) einen ersten Pfad definiert, während es sich spiralförmig um den Schaftabschnitt (322) windet, das zweite Gewinde (332) und das dritte Gewinde (333) jeweils einen zweiten Pfad und einen dritten Pfad definieren, während sie sich spiralförmig um den Bohrabschnitt (321) winden, ein erster Einschlusswinkel (A1) zwischen der Mittelachse (C1) und dem ersten Pfad des ersten Gewindes (331) definiert ist, ein zweiter Einschlusswinkel (A2) zwischen der Mittelachse (C1) und dem zweiten Pfad des zweiten Gewindes (332) definiert ist, ein dritter Einschlusswinkel (A3) zwischen der Mittelachse (C1) und dem dritten Pfad des dritten Gewindes (333) definiert ist, wobei der erste Einschlusswinkel (A1) größer ist als der dritte Einschlusswinkel (A3), wobei der dritte Einschlusswinkel (A3) größer ist als der zweite Einschlusswinkel (A2).

13. - Befestigungselement (3) nach Anspruch 12, wobei das zweite Gewinde (332) mit der Spitze (T) verbunden ist, sodass das zweite Gewinde (332) von der Spitze (T) aus zu winden beginnt.

14. - Befestigungselement (3) nach Anspruch 12, wobei das erste Gewinde (331) mit der Spitze (T) verbunden ist, sodass das erste Gewinde (331) von der Spitze (T) aus zu winden beginnt.

## Revendications

1. - Dispositif de fixation (3) comprenant :
une tête (31) ;
une unité tige (32) s'étendant longitudinalement à partir de ladite tête (31) et définissant un axe central (C1), ladite unité tige (32) comprenant une partie de perçage (321) et une partie tige (322) formée entre ladite tête (31) et ladite partie de perçage (321), ladite partie de perçage (321) ayant une pointe (T) située en relation d'opposition à ladite tête (31) ; et
une unité filet (33) disposée en spirale sur ladite unité tige (32) et agencée pour couper en copeaux des fibres d'une pièce à travailler (5) ;
ladite unité filet (33) comprend un premier filet (331) disposé en spirale sur une périphérie extérieure de ladite partie tige (322), ainsi qu'un deuxième filet (332) et un troisième filet (333) disposés en spirale sur une périphérie extérieure de ladite partie de perçage (321), respectivement, avec ledit troisième filet (333) situé entre ledit premier filet (331) et ledit deuxième filet (332), ledit troisième filet (333) ayant une première extrémité (3331) faisant face à ladite tête (31) et une seconde extrémité (3332) à l'opposé de ladite première extrémité (3331), ladite seconde extrémité (3332) dudit troisième filet (333) étant reliée à ladite pointe (T) de ladite partie de perçage (321) ;
ledit troisième filet (333) s'étendant en spirale autour de ladite périphérie extérieure de ladite partie de perçage (321), l'étendue du troisième filet (333) se prolongeant jusqu'à une surface dudit premier filet (331) de telle sorte que ladite première extrémité (3331) dudit troisième filet (333) est directement reliée audit premier filet (331) pour guider lesdits copeaux dudit troisième filet (333) audit premier filet (331), facilitant ainsi le déplacement desdits copeaux et permettant une évacuation sans à-coups desdits copeaux.

2. - Dispositif de fixation (3) selon la revendication 1, dans lequel ladite unité tige (32) définit une ligne de référence horizontale (C2) perpendiculaire audit axe central (C1), ledit premier filet (331) définissant un premier trajet tout en s'enroulant en spirale autour de ladite partie tige (322), ledit deuxième filet (332) et ledit troisième filet (333) définissant respectivement un deuxième trajet et un troisième trajet tout en s'enroulant en spirale autour de ladite partie de perçage (321), un quatrième angle inclus (A4) étant défini entre ladite ligne de référence horizontale (C2) et ledit premier trajet dudit premier filet (331), un cinquième angle inclus (A5) étant défini entre ladite ligne de référence horizontale (C2) et ledit deuxième trajet dudit deuxième filet (332), un sixième angle inclus (A6) étant défini entre ladite ligne de référence horizontale (C2) et ledit troisième trajet dudit troisième filet (333), ledit sixième angle inclus (A6) étant supérieur audit quatrième angle inclus (A4).

3. - Dispositif de fixation (3) selon la revendication 1, dans lequel ledit premier filet (331) comprend une première surface supérieure (331a) faisant face à ladite tête (31), une première surface inférieure (331b) faisant face à ladite pointe (T), et un premier angle de filet (X1) défini entre ladite première surface supérieure (331a) et ladite première surface inférieure (331b), ledit troisième filet (333) comportant une troisième surface supérieure (333a) faisant face à ladite tête (31), une troisième surface inférieure (333b) faisant face à ladite pointe (T), et un troisième angle de filet (X3) défini entre ladite troisième surface supérieure (333a) et ladite troisième surface inférieure (333b), ledit premier angle de filet (X1) étant différent dudit troisième angle de filet (X3).

4. - Dispositif de fixation (3) selon la revendication 3, dans lequel ledit premier angle de filet (X1) est inférieur audit troisième angle de filet (X3).

5. - Dispositif de fixation (3) selon la revendication 1, dans lequel ledit troisième filet (333) comprend une troisième surface supérieure (333a) faisant face à ladite tête (31) et une troisième surface inférieure (333b) faisant face à ladite pointe (T), ladite troisième surface supérieure (333a) et ladite troisième surface inférieure (333b) convergeant à une crête (333c), ladite crête (333c) définissant une ligne de référence de crête (C3) perpendiculaire audit axe central (C1), un troisième angle de filet supérieur (X31) défini entre ladite troisième surface supérieure (333a) et ladite ligne de référence de crête (C3) étant différent d'un troisième angle de filet inférieur (X32) défini entre ladite troisième surface inférieure (333b) et ladite ligne de référence de crête (C3).

6. - Dispositif de fixation (3) selon la revendication 1, dans lequel ledit deuxième filet (332) comprend une deuxième surface supérieure (332a) faisant face à ladite tête (31) et une deuxième surface inférieure (332b) faisant face à ladite pointe (T), ladite deuxième surface supérieure (332a) et ladite deuxième surface inférieure (332b) convergeant à un sommet (332c), ledit sommet (332c) définissant une ligne de référence de sommet (C4) perpendiculaire audit axe central (C1), un deuxième angle de filet supérieur (X21) défini entre ladite deuxième surface supérieure (332a) et ladite ligne de référence de sommet (C4) étant égal à un deuxième angle de filet inférieur (X22) défini entre ladite deuxième surface inférieure (332b) et ladite ligne de référence de sommet (C4).

7. - Dispositif de fixation (3) selon la revendication 1, dans lequel ledit premier filet (331) comprend une première surface supérieure (331a) faisant face à ladite tête (31), une première surface inférieure (331b) faisant face à ladite pointe (T), et un premier angle de filet (X1) défini entre ladite première surface supérieure (331a) et ladite première surface inférieure (331b), ledit deuxième filet (332) comprenant une deuxième surface supérieure (332a) faisant face à ladite tête (31), une deuxième surface inférieure (332b) faisant face à ladite pointe (T), et un deuxième angle de filet (X2) défini entre ladite deuxième surface supérieure (332a) et ladite deuxième surface inférieure (332b), ledit premier angle de filet (X1) étant différent dudit deuxième angle de filet (X2).

8. - Dispositif de fixation (3) selon la revendication 7, dans lequel ledit premier angle de filet (X1) est inférieur audit deuxième angle de filet (X2).

9. - Dispositif de fixation (3) selon la revendication 1, dans lequel ledit deuxième filet (332) comprend une deuxième surface supérieure (332a) faisant face à ladite tête (31), une deuxième surface inférieure (332b) faisant face à ladite pointe (T), et un deuxième angle de filet (X2) défini entre ladite deuxième surface supérieure (332a) et ladite deuxième surface inférieure (332b), ledit troisième filet (333) comprenant une troisième surface supérieure (333a) faisant face à ladite tête (31), une troisième surface inférieure (333b) faisant face à ladite pointe (T), et un troisième angle de filet (X3) défini entre ladite troisième surface supérieure (333a) et ladite troisième surface inférieure (333b), ledit deuxième angle de filet (X2) étant égal audit troisième angle de filet (X3).

10. - Dispositif de fixation (3) selon la revendication 1, dans lequel ledit premier filet (331) comprend une pluralité de premières circonvolutions de filet (3311), une unité de coupe (34) étant formée sur chacune desdites premières circonvolutions de filet (3311).

11. - Dispositif de fixation (3) selon la revendication 10, dans lequel ledit premier filet (3311) définit une ligne imaginaire (C5), ladite ligne imaginaire (C5) étant définie par liaison séquentielle d'unités de coupe (34) respectives de premières circonvolutions de filet (3311) adjacentes, ladite ligne imaginaire (C5) étant non parallèle audit axe central (C1) de ladite unité tige (32).

12. - Dispositif de fixation (3) selon la revendication 1, dans lequel ledit premier filet (331) définit un premier trajet tout en s'enroulant en spirale autour de ladite partie tige (322), ledit deuxième filet (332) et ledit troisième filet (333) définissant respectivement un deuxième trajet et un troisième trajet tout en s'enroulant en spirale autour de ladite partie de perçage (321), un premier angle inclus (A1) étant défini entre ledit axe central (C1) et ledit premier trajet dudit premier filet (331), un deuxième angle inclus (A2) étant défini entre ledit axe central (C1) et ledit deuxième trajet dudit deuxième filet (332), un troisième angle inclus (A3) étant défini entre ledit axe central (C1) et ledit troisième trajet dudit troisième filet (333), ledit premier angle inclus (A1) étant supérieur audit troisième angle inclus (A3), ledit troisième angle inclus (A3) étant supérieur audit deuxième angle inclus (A2).

13. - Dispositif de fixation (3) selon la revendication 12, dans lequel ledit deuxième filet (332) est relié à ladite pointe (T) de telle sorte que ledit deuxième filet (332) commence à s'enrouler en spirale à partir de ladite pointe (T).

14. - Dispositif de fixation (3) selon la revendication 12, dans lequel ledit premier filet (331) est relié à ladite pointe (T) de telle sorte que ledit premier filet (331) commence à s'enrouler en spirale à partir de ladite pointe (T).
